(19) Europäisches Patentamt
European Patent Office
Office européen des brevets

(11) **EP 2 583 948 A1**

(12) **DEMANDE DE BREVET EUROPEEN**

(43) Date de publication:
**24.04.2013 Bulletin 2013/17**

(51) Int Cl.:
***C02F 1/463*** (2006.01)

(21) Numéro de dépôt: **12306294.5**

(22) Date de dépôt: **18.10.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.10.2011 FR 1159410**

(71) Demandeur: **Université de Limoges
87032 Limoges Cedex (FR)**

(72) Inventeurs:
• **Feuillade, Geneviève
87000 Limoges (FR)**
• **Pallier, Virginie
87100 Limoges (FR)**
• **Champagnac, Emilie
19600 Chatrier Ferrière (FR)**

(74) Mandataire: **Cenatiempo, Julie Adeline Anne
Société Aquinov
Allée de la Forestière
33750 Beychac et Caillau (FR)**

(54) **Procédé de traitement d'effluents par génération in situ de coagulant et installation**

(57) L'objet de l'invention est un procédé de traitement d'un effluent brut (12) incluant une étape de coagulation-floculation (14), caractérisé en ce qu'il comprend une boucle de recirculation interposée sur la chaîne de traitement, définie par :
- une prise d'eau (20) effectuée par pompage ou par gravité sur l'eau traitée au moins après l'étape de coagulation-floculation (14), cette eau traitée étant dépourvue de microflocs en suspension,
- le passage de cette eau traitée à travers un électrolyseur (22) à électrodes de fer, qui permet de générer des cations métalliques,
- l'injection (24) de cette eau traitée chargée en cations métalliques en entrée d'étape de coagulation.
L'invention couvre aussi une installation susceptible d'être utilisée pour la mise en oeuvre de ce procédé.

FIG.1

EP 2 583 948 A1

**Description**

La présente invention concerne le traitement d'effluents bruts, notamment le traitement d'eaux naturelles brutes pour la production d'eau potable.

L'invention vise un procédé particulier de traitement d'effluents ainsi qu'une installation permettant sa mise en oeuvre.

Les installations de traitement d'effluents bruts, en particulier les installations de production d'eau potable traitant de l'eau de surface, font couramment appel à une étape de coagulation floculation qui permet d'abattre les matières en suspension (MES) et les colloïdes et d'éliminer les matières organiques et minérales.

Cette opération est réalisée grâce à l'emploi de réactifs de coagulation qui sont susceptibles soit de déstabiliser directement les MES et les colloïdes, soit de les emprisonner dans des hydroxydes qui pourront alors être éliminés.

Ces réactifs sont des sels métalliques hydrolysables, généralement des sels de fer comme du chlorure ferrique, du sulfate ferreux, etc., des sels d'aluminium comme du sulfate d'aluminium, ou des polymères d'aluminium comme des polychlorures d'aluminium, etc. injectés dans l'eau à traiter. Ils sont parfois complétés par des adjuvants de floculation : des floculants minéraux type silice activée ou des polymères organiques naturels ou synthétiques.

L'ajout de réactifs de coagulation nécessite également l'emploi de produits chimiques permettant de réguler le pH tels que de la soude, de l'acide chlorhydrique, de la chaux, etc.

Si ce procédé est efficace, les produits utilisés peuvent être dangereux pour l'environnement et toxiques pour l'homme.

En outre, les coagulants et produits chimiques de régulation de pH doivent être acheminés par camions, puis stockés sur le site de l'usine de traitement d'eau potable avant leur injection. La manipulation lors des rechargements et le stockage de ces produits entraînent de nombreuses contraintes en termes de sécurité : bac de rétention en cas de fuite, douche de sécurité, équipements individuels spéciaux, personnel qualifié, etc.

De plus, l'utilisation de coagulants entraîne un apport complémentaire d'ions non utiles au traitement mais qui restent présents dans l'eau délivrée au consommateur, comme des chlorures ou des sulfates.

Depuis plusieurs années, des recherches ont donc été menées pour remplacer l'emploi des réactifs chimiques par un système d'électrocoagulation. L'électrocoagulation à l'aide d'électrodes de fer ou d'aluminium se présente en effet comme une méthode alternative pour générer des sels métalliques solubles. On connaît notamment les brevets FR-2.751.637 ou FR-2.707.282 ou encore la demande WO-8.600.287 qui décrivent l'utilisation d'une cellule d'électrocoagulation pour le traitements d'effluents industriels ou des eaux usées. On sait aussi que l'électrocoagulation en ligne peut être appliquée à la production d'eau potable, comme décrit par exemple dans la thèse de M. BRIZARD (BRIZARD Y. - « L'électrocoagulation appliquée à la production d'eau potable au moyen d'électrodes en fer» -Thèse de doctorat, Limoges, 2001.). Toutefois cette technique d'électrocoagulation en ligne n'est actuellement pas utilisé, en particulier pour la production d'eau potable, car elle entraîne la dégradation de la matière organique et autres colloïdes présents dans l'eau brute en sous-produits peu identifiés lors du passage au travers de la cellule d'électrocoagulation. Ces produits sont potentiellement dangereux lorsqu'ils sont soumis à une chloration et sont donc incompatibles avec la réglementation relative à l'eau potable. De plus, certains ions pouvant réagir au niveau des électrodes sont susceptibles de générer des formes nocives pour la santé humaine.

Aussi la présente invention a pour objectif de pallier les inconvénients de l'art antérieur en proposant un procédé de traitement d'effluent qui soit à la fois efficace, simple de mise en oeuvre, qui ne nécessite pas la manipulation de produits dangereux ou toxiques et qui soit compatible avec les réglementations en vigueur, en particulier les réglementations relatives à l'eau de consommation. A cet effet, l'invention propose d'utiliser dans le procédé de traitement, une recirculation de l'eau traitée pour générer une solution chargée en cations métalliques. En particulier l'invention vise un procédé de traitement d'un effluent brut avec une étape de coagulation-floculation, comprenant une boucle de recirculation interposée sur la chaîne de traitement, définie par :

- une prise d'eau effectuée par pompage ou par gravité sur l'eau traitée au moins après l'étape de coagulation-floculation, cette eau traitée étant dépourvue de microflocs en suspension,
- le passage de cette eau traitée à travers un électrolyseur à électrodes de fer, qui permet de générer des cations métalliques,
- l'injection de cette eau traitée chargée en cations métalliques en entrée d'étape de coagulation.

Le procédé selon l'invention est applicable à tout type d'effluent à traiter, tels que des lixiviats, des effluents industriels, etc. mais il est particulièrement adapté au traitement des eaux brutes naturelles en vue d'une production d'eau potable.

Avantageusement, le procédé selon l'invention ne nécessite aucun ajout de produit chimique coagulant ou de produit chimique pour la régulation du pH. En outre, en utilisant l'eau déjà traitée en entrée de l'électrolyseur, l'invention évite la formation de sous-produits issus des matières organiques, susceptibles d'être dangereux.

D'autres caractéristiques et avantages ressortiront de la description en détail qui va suivre, description donnée à titre d'exemple uniquement, en regard notamment des dessins annexés sur lesquels :

- la figure 1 représente un schéma d'une variante d'un procédé selon l'invention pour le traitement d'un effluent, dans lequel la prise d'eau est effectuée sur l'eau traitée après l'étape de coagulation-floculation, et
- la figure 2 représente un schéma d'un procédé selon l'invention pour la production d'eau potable.

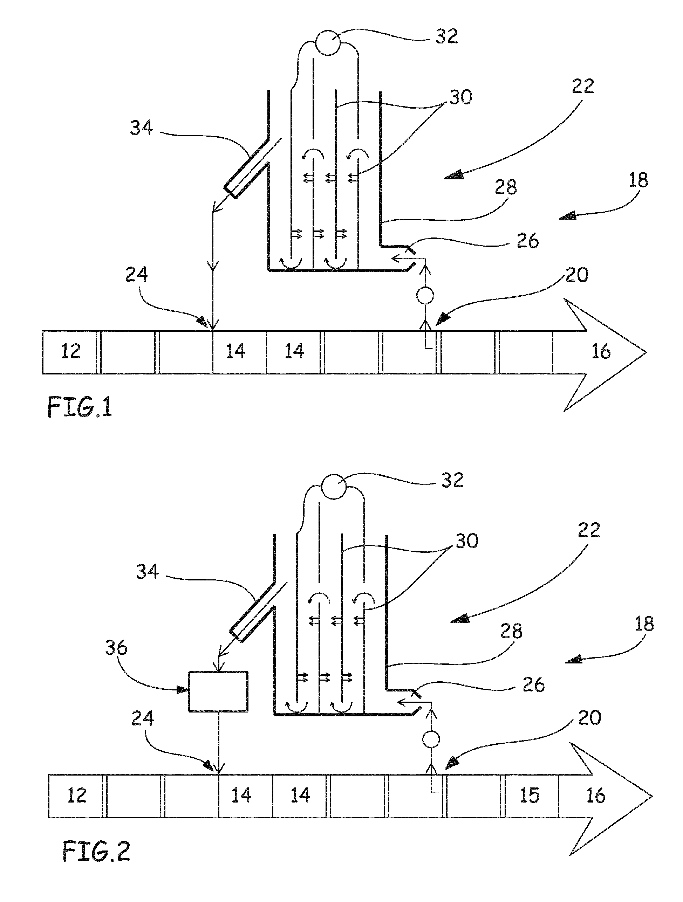

Comme représenté sur la figure 1, l'invention vise donc un procédé de traitement d'un effluent brut 12 incluant une étape de coagulation-floculation 14 pour obtenir un effluent traité 16, comprenant une boucle de recirculation 18 interposée sur la chaîne de traitement, définie par :

- une prise d'eau 20 effectuée par pompage ou par gravité sur l'eau traitée au moins après l'étape de coagulation-floculation 14, cette eau traitée étant dépourvue de microflocs en suspension,
- le passage de cette eau traitée à travers un électrolyseur à électrodes de fer 22, qui permet de générer des cations métalliques,
- l'injection 24 de cette eau traitée chargée en cations métalliques en entrée d'étape de coagulation.

Par microflocs on entend la définition connue par l'homme du métier, à savoir des particules non décantables qui restent en suspension, et qui font une taille de l'ordre de quelques micromètres.

La prise d'eau 20 est effectuée par pompage ou par gravité sur l'eau traitée à une étape postérieure à l'étape de coagulation-floculation 14. Dans le cas de la production d'eau potable à partir d'eau naturelle brute (figure 2), la prise d'eau 20 est effectuée avant l'étape de chloration finale 15.

L'eau traitée prélevée pour le passage à travers l'électrolyseur doit être dépourvue de microflocs en suspension. Elle doit posséder une très faible charge organique, une faible turbidité et une conductivité suffisante pour assurer le bon fonctionnement de l'électrolyseur.

Ceci est possible grâce à la localisation spécifique de la prise d'eau, après traitement de l'effluent brut par au moins une étape de coagulation-floculation. Cette étape de coagulation-floculation permet en effet de diminuer fortement la charge organique et la turbidité de l'eau qui sont nulles ou très faibles, et d'éliminer tous les microflocs en suspension. Ainsi, il n'y a pas de risque de création de sous-produits chlorés de dégradation lors du passage au travers de l'électrolyseur. En outre, cette eau traitée utilisée pour l'électrocoagulation est une eau mise à l'équilibre calco-carbonique, ce qui lui confère une conductivité suffisante pour permettre le passage du courant.

Selon une variante moins adaptée, la prise d'eau 20 pourrait être effectuée sur une eau en dehors du procédé de traitement, mais répondant à des critères d'eau potable.

L'eau passe ensuite au travers d'un générateur de coagulant ou électrolyseur 22. Préférentiellement, l'électrolyseur est un électrolyseur à électrodes de fer fonctionnant en mode bipolaire sinusoïdal.

Selon un mode de réalisation particulièrement adapté, l'électrolyseur est composé :

- d'un dispositif d'alimentation en eau traitée 26,
- d'un carter isolant 28 contenant plusieurs électrodes plates en fer 30, les électrodes extrêmes étant reliées à un générateur de courant continu 32, et
- d'un dispositif d'évacuation 34 de la solution chargée en cations métalliques et d'injection 24 en entrée d'étape de coagulation.

Dans le carter 28, les électrodes plates en fer 30 sont maintenues à un espace interpolaire défini de l'ordre du centimètre et dépendant du débit appliqué, au moyen d'un système rainuré isolant. Ce système rainuré couplé à la forme des électrodes permet d'assurer une circulation sinusoïdale du fluide.

Lors de l'application d'un courant continu aux bornes des électrodes, celles-ci se polarisent ce qui entraîne : une oxydation du métal aux anodes et une réduction de l'eau aux cathodes.

Les électrodes étant constituées de fer, la réaction anodique est donc une oxydation du fer (Fe) en fer ferreux ($Fe^{2+}$), qui en présence d'oxygène s'oxyde en fer ferrique ($Fe^{3+}$). Ces cations métalliques, en milieu aqueux, réagissent avec l'eau pour former des oxydes de fer II et III ($Fe(OH)_2$ et $Fe(OH)_3$) capables de s'agglomérer et de former des flocs.

La réaction cathodique conduit à la formation :

- d'ions hydroxydes $OH^-$ qui participent avantageusement à l'autorégulation du pH, et
- de dihydrogène, qui peut être valorisé.

La quantité de coagulant générée suit la loi de Faraday avec un rendement faradique de 100%. La concentration en ions de la solution produite par le générateur de coagulant est déterminée par l'expression simplifiée suivante :

$$|fer| = \frac{1{,}042 \cdot I}{Q} \cdot (p-1)$$

avec Q : débit d'alimentation de l'électrolyseur en L/h

I : l'intensité appliquée aux bornes des électrodes extrêmes en A

p : le nombre d'électrodes utilisées dans l'électrolyseur

Ainsi, le taux de traitement du procédé selon l'invention peut être régulé en jouant à la fois sur le débit de la boucle de recirculation et sur l'intensité délivrée aux bornes des électrodes.

Le procédé de traitement selon l'invention peut être appliqué à tout type d'effluent brut 12 susceptible d'être traité, notamment des lixiviats, des effluents industriels, des eaux usées, mais également des eaux naturelles brutes.

En effet, comme représenté sur la figure 2, le procédé selon l'invention est particulièrement adapté au traitement des eaux brutes pour la production d'eau potable 16 destinée à la consommation humaine.

Selon un mode de réalisation, le procédé selon l'invention comprend également une étape d'aération 36 à la sortie du générateur de coagulant avant l'injection des sels métalliques dans la chaîne de traitement, afin d'oxyder les ions ferreux en ions ferriques et améliorer encore la turbidité et l'absorbance UV de l'eau traitée par coagulation-floculation.

Selon une autre variante, il est également possible de mettre en place un apport d'ions afin d'augmenter la conductivité de l'effluent et ainsi diminuer la consommation d'énergie, en particulier pour les eaux faiblement minéralisées. Avantageusement, en générant in situ le coagulant, l'invention permet de s'affranchir des problèmes liés au stockage, à l'approvisionnement, à la manipulation et à l'injection des réactifs de coagulation. Le procédé selon l'invention limite donc les risques d'accidents à la fois corporels et écologiques en cas de fuite sur une cuve de stockage.

De plus, l'invention permet également de s'affranchir de l'utilisation de produits chimiques nécessaires à la régulation de pH pendant la phase de coagulation, puisqu'avec le procédé selon l'invention le pH s'autorégule aux environ de la neutralité.

Selon un autre avantage, la mise en oeuvre du procédé selon l'invention permet de n'apporter en solution que l'espèce active utile au traitement, à savoir des ions ferreux et ferriques.

En outre, l'eau utilisée en entrée de l'électrolyseur étant exempte de matière organique, l'électrolyse ne créé pas la formation de sous-produits potentiellement dangereux, et répond ainsi aux normes établies pour la production d'eau potable.

Selon un autre aspect l'invention couvre également une installation adaptée à la mise en oeuvre du procédé.

En particulier l'invention vise une installation pour le traitement d'eau brute et la production d'eau potable comprenant un électrolyseur à électrodes de fer capable de générer des cations métalliques, disposé en parallèle de la chaîne de traitement.

Préférentiellement l'électrolyseur à électrodes de fer fonctionne en mode bipolaire sinusoïdal.

En particulier l'électrolyseur est tel que décrit précédemment. Il est préférentiellement composé notamment :

- d'un dispositif d'alimentation en eau traitée,
- d'un carter isolant contenant plusieurs électrodes plates en fer, les électrodes extrêmes étant reliées à un générateur de courant continu, et
- d'un dispositif d'évacuation de la solution chargée en cations métalliques en entrée d'étape de coagulation.

Avantageusement, l'installation selon l'invention est relativement compacte, avec une faible emprise au sol.

L'installation peut être entièrement automatisée et son utilisation ne nécessite pas un savoir-faire important pour une exploitation quotidienne.

En outre, son autonomie de fonctionnement est plus importante que celle des installations existantes qui nécessitent des rechargements par camions spéciaux et un stockage sécurisé des réactifs. Dans le cas de l'invention, les consommables sont des électrodes de fer qui peuvent être stockées dans un quelconque local comme toutes les autres pièces de maintenance.

L'invention peut être illustrée par des essais réalisés pour la production d'eau potable.

Les essais ont été réalisés sur deux eaux brutes différentes, A et B, présentant les caractéristiques suivantes :

|  | Conductivité $\mu$S/cm | Température °C | Turbidité NFU | pH | Absorbance 254nm |
|---|---|---|---|---|---|
| Eau A | 150 à 180 | 15 à 20 | 2 à 4 | 6,6 à 7,2 | 0,13 à 0,15 |
| Eau B | 63 | 16 à 20 | 2 à 3 | 7,2 | 0,13 |

Le procédé de traitement des eaux brutes pour produire de l'eau potable est un procédé classique comprenant les étapes suivantes :

- tamisage
- reminéralisation
- oxydation à l'ozone
- coagulation - floculation
- décantation ou flottation
- filtration sur sable
- désinfection finale (chloration).

Un electrolyseur à électrodes de fer est placé sur une boucle de recirculation. La prise d'eau est réalisée par pompage et l'injection de l'eau chargée en cations métalliques est réalisée en entrée d'étape de coagulation.

Le protocole opératoire est le suivant :

- On génère une solution chargée en fer :

● La conductivité de l'eau de distribution utilisée est augmentée, si nécessaire, par ajout de NaCl jusqu'à atteindre 500 à 530 $\mu$S/cm. Si l'eau a été préalablement reminéralisée, l'augmentation de la conductivité n'est pas obligatoire.
● Cette conductivité permet d'obtenir une intensité réelle de 3,42 A pour une tension de 60V.
● Le pilote d'électrocoagulation fonctionne avec 10 électrodes en fer, 2 mm d'espace interpolaire et un débit de 110 $\pm$ 5 L/h.
● Les électrodes ont une surface active de :

241 cm$^2$ pour les électrodes de Type1
255 cm$^2$ pour les électrodes de Type2

● Lorsque l'intensité souhaitée est atteinte, on stabilise cette dernière pendant environ 5 minutes avant de prélever la solution qui sera utilisée en Jar-Test.

- On introduit différents volumes de cette solution dans 500mL d'eau brute afin d'obtenir une gamme de traitement allant de 10 à 80 mg Fe /L.
- Les solutions sont alors agitées avant décantation selon les conditions suivantes :

5 minutes d'agitation rapide à 150 rpm
15 minutes d'agitation lente à 30 rpm
30 minutes de décantation

Ces essais sont réalisés avec et sans système d'aération.

- Les analyses sont effectuées sur des échantillons prélevés après une simple décantation (sur le surnageant brut directement après coagulation-floculation) mais aussi après filtration (membrane filtrante à 1,2 $\mu$m qui simule le filtre à sable)

Plusieurs essais ont été réalisés. Les moyennes des résultats obtenus sont présentés dans des tableaux en suivant :

**Tableau 1 : Eau A**

| | Coagulation classique avec chlorure ferrique | Electro-coagulation sans aération | Electro-coagulation + aération par 3 chutes d'eau type 3 de 20cm | Electro-coagulation + aération par 3 chutes d'eau type 3 de 30cm | Electro-coagulation + aération par 2 chutes d'eau type 3 de 30cm |
|---|---|---|---|---|---|
| SURNAGEANT: | | | | | |
| **Turbidité** | 0,04 | 1,36 | 0,93 | 0,70 | 0,98 |
| **Abs 254 nm** | 0,031 | 0,094 | 0,071 | 0,060 | 0,067 |
| **Abattement turbidité (%)** | 98,13% | 43,42% | 69,94% | 76,41% | 69,86% |
| **Abattement Abs 254nm (%)** | 74,04% | 31,45% | 37,83% | 40,34% | 35,57% |
| APRES FILTRATION : | | | | | |
| **Turbidité** | 0,12 | 0,23 | 0,04 | 0,04 | 0,07 |
| **Abs 254 nm** | 0,024 | 0,029 | 0,027 | 0,026 | 0,026 |
| **Abattement turbidité (%)** | 94,29% | 88,38% | 98,70% | 98,61% | 97,71 |
| **Abattement Abs 254nm (%)** | 79,76% | 75,86% | 76,29% | 73,60% | 74,67% |

**Tableau 2 Eau B**

| | Coagulation classique avec chlorure ferrique | Electro-coagulation sans aération | Electro-coagulation + aération par 2 chutes d'eau type 3 de 30cm |
|---|---|---|---|
| SURNAGEANT: | | | |
| **Turbidité** | 0,05 | 3,18 | 1,34 |
| **Abs 254 nm** | 0,054 | 0,118 | 0,067 |
| **Abattement turbidité (%)** | 98,16% | -65,00% | 55,55% |
| **Abattement Abs 254nm (%)** | 63,15% | 14,41% | 43,75% |
| APRES FILTRATION : | | | |
| **Turbidité** | 0,03 | 0,11 | 0,16 |
| **Abs 254 nm** | 0,021 | 0,019 | 0,032 |
| **Abattement turbidité (%)** | 98,96% | 77,46% | 94,66% |
| **Abattement Abs 254nm (%)** | 85,60% | 68,67% | 72,77% |

Ces résultats montrent qu'après filtration, le procédé selon l'invention permet d'obtenir une eau de qualité semblable à celle obtenu avec une coagulation à l'aide de chlorure ferrique, en terme d'abattement de turbidité et d'absorbance 254nm.

En outre, on constate que la présence d'une étape d'aération permet d'améliorer cette qualité avant filtration.

Bien entendu, l'invention n'est évidemment pas limitée à l'exemple de procédé utilisé pour les essais, mais couvre au contraire toutes les variantes permettant la mise en oeuvre du procédé revendiqué.


**Revendications**

1. Procédé de traitement d'un effluent brut (12) incluant une étape de coagulation-floculation (14), **caractérisé en ce qu'**il comprend une boucle de recirculation (18) interposée sur la chaîne de traitement, définie par :

   - une prise d'eau (20) effectuée par pompage ou par gravité sur l'eau traitée au moins après l'étape de coagulation-floculation (14), cette eau traitée étant dépourvue de microflocs en suspension,
   - le passage de cette eau traitée à travers un électrolyseur à électrodes de fer (22), qui permet de générer des cations métalliques,
   - l'injection (24) de cette eau traitée chargée en cations métalliques en entrée d'étape de coagulation.

2. Procédé de traitement d'un effluent brut (12) selon la revendication 1, **caractérisé en ce que** l'électrolyseur (22) est un électrolyseur à électrodes de fer fonctionnant en mode bipolaire sinusoïdal.

3. Procédé de traitement d'un effluent brut (12) selon l'une des précédentes revendications, caractérisé en en ce que l'électrolyseur (22) est composé :

   - d'un dispositif d'alimentation en eau traitée (26),
   - d'un carter isolant (28) contenant plusieurs électrodes plates en fer (30), les électrodes extrêmes étant reliées à un générateur de courant continu (32), et
   - d'un dispositif d'évacuation (34) de la solution chargée en cations métalliques et d'injection (24) en entrée d'étape de coagulation.

4. Procédé de traitement d'un effluent brut (12) selon l'une des précédentes revendications, **caractérisé en ce que** la solution chargée en cations métalliques passe dans un système d'aération (36) avant l'injection en entrée d'étape de coagulation.

**5.** Procédé de traitement d'un effluent brut (12) selon l'une quelconque des précédentes revendications, **caractérisé en ce que** ledit effluent brut (12) est une eau naturelle brute destinée à la production d'eau potable (16).

**6.** Procédé de traitement d'un effluent brut (12) selon la revendication 5, **caractérisé en ce que** la prise d'eau est effectuée par pompage sur l'eau traitée après l'étape de coagulation-floculation et avant l'étape de chloration (15).

**7.** Procédé de traitement d'un effluent brut (12) selon l'une quelconque des revendications 1 à 4, **caractérisé en ce que** l'effluent brut (12) est un lixiviat ou un effluent industriel.

**8.** Installation pour le traitement d'eau brute (12) et la production d'eau potable comprenant un électrolyseur (22) à électrodes de fer capable de générer des cations métalliques, disposé en parallèle de la chaîne de traitement.

**9.** Installation pour le traitement d'eau brute (12) et la production d'eau potable selon la revendication 8, **caractérisé en ce que** l'électrolyseur (22) à électrodes de fer fonctionne en mode bipolaire sinusoïdal.

**10.** Installation pour le traitement d'eau brute (12) et la production d'eau potable selon la revendication 8 ou 9, **caractérisé en ce que** l'électrolyseur (22) est composé :

- d'un dispositif d'alimentation en eau traitée (26),
- d'un carter isolant (28) contenant plusieurs électrodes plates en fer (30), les électrodes extrêmes étant reliées à un générateur de courant continu (32), et
- d'un dispositif (34) d'évacuation de la solution chargée en cations métalliques et d'injection (24) en entrée d'étape de coagulation.

FIG.1

FIG.2

Europäisches
Patentamt

European
Patent Office

Office européen
des brevets

# RAPPORT DE RECHERCHE EUROPEENNE

Numéro de la demande

EP 12 30 6294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/020631 A1 (GAVREL TOM GUS [US] ET AL) 21 février 2002 (2002-02-21) * alinéas [0018] - [0033]; figures 1,3 * ----- | 1-10 | INV. C02F1/463 |
| A | FR 855 886 A (JEAN F) 22 mai 1940 (1940-05-22) * le document en entier * ----- | 1-10 | |
| A | US 2010/314263 A1 (LEAN MENG H [US] ET AL) 16 décembre 2010 (2010-12-16) * le document en entier * ----- | 1-10 | |

| DOMAINES TECHNIQUES RECHERCHES (IPC) |
|---|
| C02F |

Le présent rapport a été établi pour toutes les revendications

| Lieu de la recherche | Date d'achèvement de la recherche | Examinateur |
|---|---|---|
| La Haye | 4 décembre 2012 | Liebig, Thomas |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 30 6294

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-12-2012

| Document brevet cité au rapport de recherche | Date de publication | Membre(s) de la famille de brevet(s) | Date de publication |
|---|---|---|---|
| US 2002020631 A1 | 21-02-2002 | AUCUN | |
| FR 855886 A | 22-05-1940 | BE 433092 A<br>FR 855886 A | 04-12-2012<br>22-05-1940 |
| US 2010314263 A1 | 16-12-2010 | CN 101921027 A<br>US 2010314263 A1<br>US 2012211432 A1 | 22-12-2010<br>16-12-2010<br>23-08-2012 |

EPO FORM P0460

Pour tout renseignement concernant cette annexe : voir Journal Officiel de l'Office européen des brevets, No.12/82

**EP 2 583 948 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2751637
- FR 2707282
- WO 8600287 A

**Littérature non-brevet citée dans la description**

- **BRIZARD Y.** L'électrocoagulation appliquée à la production d'eau potable au moyen d'électrodes en fer. *Thèse de doctorat,* 2001